# FASCICULE DE BREVET EUROPEEN

(11) **EP 3 562 733 B1**
(45) Date de publication et mention de la délivrance du brevet: **16.06.2021**
(21) Numéro de dépôt: 17825580.8
(22) Date de dépôt: 15.12.2017
(51) Int. Cl.: B62D 25/04, B62D 25/08, B62D 27/02, B62D 29/04

(54) **PIÈCE DE STRUCTURE ARRIÈRE D'UN VÉHICULE AUTOMOBILE À LIAISONS CONTINUES**
KRAFTFAHRZEUGAUFBAUHECKTEIL MIT KONTINUIERLICHEN VERBINDUNGEN
MOTOR VEHICLE SUPERSTRUCTURE REAR PORTION WITH CONTINUOUS INTERCONNECTIONS

(30) Priorité: 30.12.2016 FR 1663560
(43) Date de publication de la demande: 06.11.2019
(73) Titulaire: Compagnie Plastic Omnium, 69007 Lyon (FR)
(72) Inventeur: ROCHEBLAVE, Laurent, 69100 Villeurbanne (FR)
(74) Mandataire: LLR
(86) Numéro de dépôt international: PCT/FR2017/053594
(87) Numéro de publication internationale: WO 2018/122488

(56) Documents cités:
- EP-A2- 1 386 828
- DE-A1-102010 014 574
- DE-A1-102012 210 764
- FR-A1- 2 983 817

## Description

La présente invention concerne le domaine technique des pièces de structure de véhicules automobiles, et notamment le domaine des pièces de structure servant à constituer l'arrière de la structure d'un véhicule.

Dans l'état de la technique, tel que les documents FR2983817A1, DE102010014574A1, DE102012210764 A1 et DE102012210764 A1, on sait que les pièces de structure formant le squelette du véhicule, désigné parfois caisse ou châssis, sont formées par assemblage de tôles d'acier, soudées les unes aux autres par des points de soudure rapprochés mais discontinus.

Un inconvénient de l'état de la technique est que la raideur d'un corps formé de plusieurs pièces soudées entre elles dépend de la qualité et surtout du nombre de points de soudure. C'est pour cette raison que les points de soudure d'un squelette de véhicule sont assez rapprochés. Cependant, aussi rapprochés soient-ils, les points de soudure laissent entre eux des parties de tôle non solidaires, ce qui fragilise l'ensemble et peut occasionner des concentrations de contraintes. Un autre inconvénient est que le nombre de tôles formant une pièce de structure peut être très élevé, ce qui complexifie la chaine d'assemblage. Un autre inconvénient est qu'à la fois la densité du métal utilisé et le nombre de tôles entraine un poids total élevé, ce qui va à l'encontre des objectifs poursuivis par les constructeurs, qui recherchent systématiquement des solutions d'allègement.

Un objet de l'invention est une pièce de structure arrière d'un véhicule automobile, comprenant au moins un pilier latéral arrière constitué par un ensemble de constituants assemblés les uns aux autres, caractérisée en ce que les constituants sont majoritairement réalisés en matière plastique et en ce que certains au moins des constituants sont solidarisés les uns aux autres le long de segments de solidarisation continus, caractérisée en ce que les segments de solidarisation continus présentent une longueur minimale chacun de 10 cm et laissent entre eux des discontinuités d'au maximum 10 mm et en ce que toutes les paires de surfaces en vis-à-vis appartenant aux constituants qui sont non solidarisées entre elles sont distantes, deux à deux dans une paire, d'au moins 7 mm.

Un avantage des segments de solidarisation continus est qu'ils procurent une liaison sans interruption entre les constituants du pilier, ce qui accroit la raideur et la résistance de ce dernier.

Dans la présente description, on entend par matière plastique, une matière constituée par une matrice en résine et éventuellement des additifs, des fibres et des charges. La matière plastique est ici une matière moulée ou surmoulée, en général par injection.

On entend par "majoritairement réalisée en matière plastique" une pièce qui contient au moins 50% en poids de matière plastique. Ainsi, une pièce en tôle métallique qui serait localement surmoulée de matière plastique représentant moins de ce pourcentage du poids total de la pièce ne serait pas considérée, au sens de l'invention, comme réalisée en matière plastique. Selon l'invention, le pilier latéral arrière est celui qui est souvent désigné "pilier C" par l'homme du métier.

Selon un mode de réalisation particulier de la pièce de structure, la matière plastique est un polymère, auquel sont mélangées des fibres coupées.

Selon un mode de réalisation particulier de la pièce de structure, le polymère est choisi parmi la liste constituée de : époxy ; polyester insaturé ; vinylester ; polyamide ; polybutylène téréphtalate.

Selon un mode de réalisation particulier de la pièce de structure, la matière plastique est renforcée de fibres de renfort, de préférence des fibres de verre ou des fibres de carbone, présentes dans une proportion comprise entre 30% et 60% en poids du total de la matière.

Selon un mode de réalisation particulier de la pièce de structure, les fibres de renfort sont des fibres coupées noyées dans la matière plastique d'un au moins des constituants.

Selon un mode de réalisation particulier de la pièce de structure, les fibres de renfort d'un constituant sont complétées par des fibres continues unidirectionnelles ou sous forme de tissus, présentes dans de morceaux de renforts constitués de ces fibres noyées dans une matière plastique qui peut être la même que celle du constituant ou une autre matière plastique chimiquement compatible avec celle du constituant.

Selon un mode de réalisation particulier de la pièce de structure, les segments de solidarisation continus sont des cordons de collage.

Selon un mode de réalisation particulier de la pièce de structure, les cordons de collage ont une largeur comprise entre 8 mm et 25 mm, de préférence entre 10 et 20 mm.

Selon un mode de réalisation particulier de la pièce de structure, les segments de solidarisation continus sont des lignes de soudure thermoplastique.

Selon la pièce de structure, objet de l'invention, les segments de solidarisation continus présentent chacun une longueur minimale de 10 cm et laissent entre eux des discontinuités d'au maximum 10 mm.

La valeur de 10 cm est une limite inférieure qui permet de caractériser le caractère continu d'un segment de solidarisation selon l'invention.

Selon un mode de réalisation particulier de la pièce de structure, dans toutes les paires de surfaces en vis-à-vis appartenant aux constituants, les deux surfaces d'une même paire sont solidarisées entre elles par des segments de solidarisation continus.

Selon la pièce de structure, objet de l'invention, toutes les paires de surfaces en vis-à-vis appartenant aux constituants qui sont non solidarisées entre elles sont distantes, deux à deux dans une paire, d'au moins 7 mm.

Selon un mode de réalisation particulier de la pièce de structure, l'un au moins des constituants comprend un insert métallique.

Selon un mode de réalisation particulier, la pièce de structure est du type comprenant deux piliers latéraux arrières réunis par une traverse supérieure.

Selon un mode de réalisation particulier de la pièce de structure, les deux piliers latéraux arrières sont réunis par un plancher.

Selon un mode de réalisation particulier de la pièce de structure, l'un des trois constituants est solidarisé à un panneau de carrosserie le long de segments de solidarisation continus.

Un avantage de la solidarisation avec un panneau de carrosserie est que le pilier a une raideur encore plus grande à l'emplacement du panneau de carrosserie, car ce panneau de carrosserie ajoute sa propre inertie à l'ensemble déjà constitué par les constituants assemblés par les segments de solidarisation continus.

L'invention sera mieux comprise à la lecture des figures annexées, qui sont fournies à titre d'exemples et ne présentent aucun caractère limitatif, dans lesquelles :
- la figure 1 est un croquis général d'une structure arrière de véhicule automobile comprenant notamment un pilier latéral arrière,
- la figure 2 est une section selon le plan horizontal II-II de la figure 1, du pilier latéral arrière portant une aile,
- la figure 3 est une vue éclatée de la structure arrière de la figure 1, avant assemblage des pièces dont elle est constituée,
- la figure 4 est une vue tridimensionnelle et en coupe selon II-II montrant l'aile solidarisée à la pièce de structure,
- la figure 5 est une vue tridimensionnelle d'un coin supérieur du pilier latéral arrière des figures 2 et 3,
- la figure 6 est une section selon le plan vertical VI-VI de la figure 5.

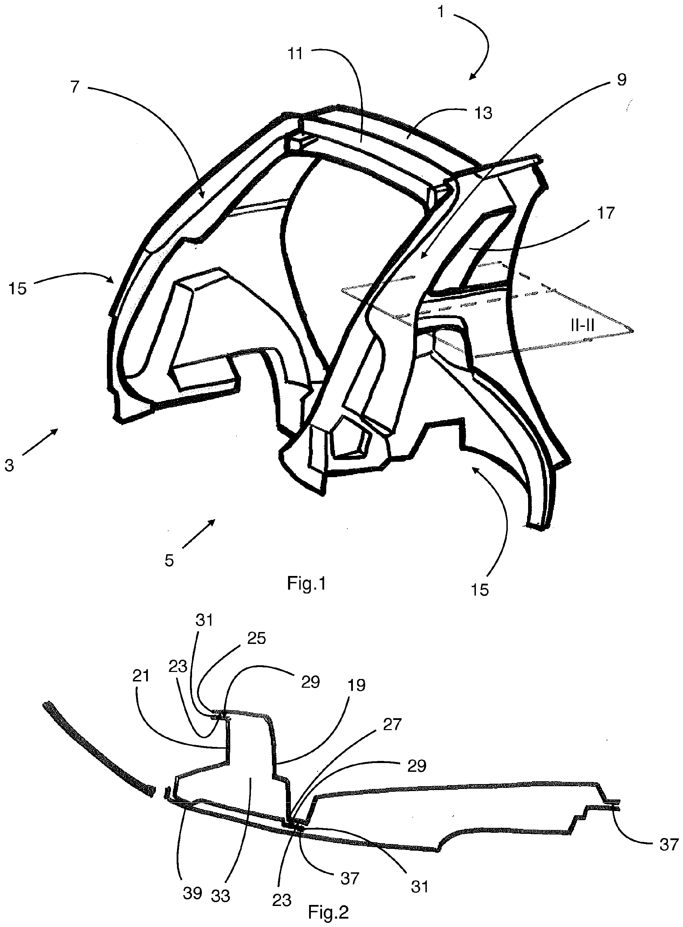

Sur la figure 1, on a représenté très schématiquement l'arrière d'une structure 1 de véhicule automobile. Cette structure 1 comprend un côté gauche 3 et un côté droit 5, respectivement formés par un pilier gauche 7 et un pilier droit 9. Les deux piliers 7, 9 sont reliés par une, voire plus d'une, traverse supérieure 11 qui ferme l'arrière du toit 13, également désigné pavillon (non représenté entièrement). Un plancher (non représenté) relie le bas des deux piliers 7, 9.

Le côté droit 5 et le côté gauche 3 comportent chacun un passage de roue 15 pour une roue arrière (non représentée), ainsi qu'une ouverture pour une vitre de custode 17. D'autres ouvertures peuvent être prévues dans la pièce de structure 1, pour l'alléger ou pour remplir des fonctions spécifiques au véhicule considéré. Ces détails géométriques ne sont pas davantage décrits car ils ne sont pas pertinents pour décrire la présente invention.

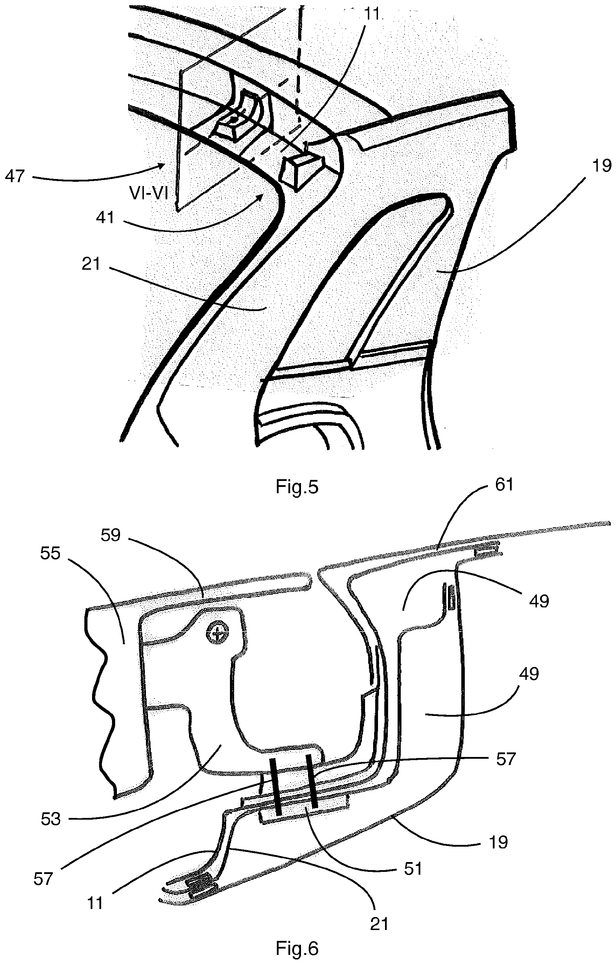

La structure 1 délimite, vers l'arrière du véhicule, un anneau arrière, qui est la zone sur laquelle un hayon 55 (figure 6) monté mobile sur la structure 1 arrière vient prendre appui en position fermée.

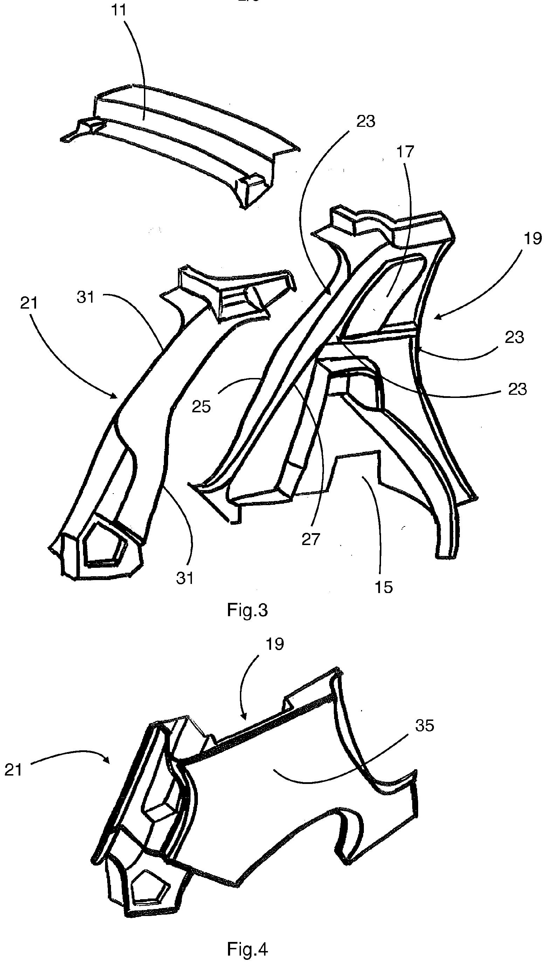

Chaque pilier 7, 9 est formé de plusieurs constituants majoritairement réalisés en matière plastique, superposés les uns sur les autres et fixés entre eux par au moins un segment de solidarisation continu. Dans l'exemple, les constituants sont au nombre de deux : un constituant interne 19 et un constituant externe 21, que l'on distingue nettement sur la section de la figure 2 et sur l'éclaté de la figure 3.

Le constituant interne 19 s'étend vers l'avant du véhicule en délimitant les contours de la custode 17 ainsi que le passage de roue 15. Il comporte des rebords plats 23 tournés vers l'extérieur continus en différents endroits et notamment le long de son arête intérieure 25 bordant le pilier 7, 9, ainsi que le long de son arête extérieure 27 bordant le même pilier 7, 9.

Le constituant externe 21 s'étend tout le long du pilier 7, 9 et recouvre le constituant interne 19. Le constituant externe 21 comporte des rebords plats 29 tournés vers l'intérieur, continus en différents endroits et notamment sur ses arêtes longitudinales 31.

Les rebords plats 23 tournés vers l'extérieur du constituant interne 19 et les rebords plats 29 tournés vers l'intérieur du constituant externe 21 sont superposables, c'est-à-dire que leurs formes coïncident et qu'ils peuvent s'appliquer continûment l'un contre l'autre, de manière à pouvoir être collés ou soudés l'un à l'autre de façon continue. Dans ce mode de réalisation, on entend par s'appliquer continument le fait que deux rebords en vis-à-vis sont distants l'un de l'autre d'une distance inférieure à l'épaisseur d'une couche de colle. La distance n'est donc pas nécessairement nulle entre les deux rebords. En fonction de la colle, cette épaisseur varier entre 0,8 mm et 1,5 mm. Dans le cas d'une fixation par soudure, cette distance serait nulle. Dans le présent mode de réalisation où la fixation est un collage, dans le pilier 7, 9, il n'existe pas deux paires de surfaces des constituants 19, 21 qui soient en vis-à-vis l'une de l'autre et distantes l'une de l'autre de moins de 7 millimètres sans être collées l'une à l'autre. Autrement dit, dans toutes les paires de surfaces en vis-à-vis appartenant aux constituants, les deux surfaces d'une même paire sont solidarisées entre elles par des segments de solidarisation continus.

La solidarisation entre les constituants 19, 21 est assurée par des segments de solidarisation continus, c'est-à-dire que le constituant interne 19 et le constituant externe 21 sont solidarisés l'un à l'autre le long de segments ne présentant pas de discontinuité intrinsèque, c'est-à-dire que chaque segment est continu d'une de ses extrémités à l'autre et que plusieurs segments peuvent aussi être mis bout à bout pour assurer la solidarisation du constituant interne 19 et du constituant externe 21. Ici, les segments de solidarisation continus sont des segments de collage.

L'absence de discontinuité réduit les risques de concentration de contraintes en un point quelconque du pilier 7, 9 et garantit une meilleure solidité d'ensemble de ce pilier 7, 9.

Grâce à la solidarisation des constituants 19, 21 et à leurs formes, les deux constituants 19, 21, assemblés du fait de leur solidarisation par les segments de solidarisation continus, forment un corps creux 33, lequel confère au pilier 7, 9 une grande rigidité.

Chacun des constituants 19, 21 est réalisé en SMC (pour "sheet molding compound") fait de polyester insaturé, auquel sont mélangées des fibres de verre coupées ou des fibres de carbone coupées, ainsi qu'éventuellement, par endroits, des morceaux (ou "lés") de renforts à fibres continues unidirectionnelles ou sous forme de tissus, noyées dans le même polymère thermodurcissable. Chaque constituant a été obtenu par dépose, dans un moule de compression, de flans de matière mélangeant une matrice de résine thermodurcissable comme du polyester et des fibres coupées et de morceaux de renfort local, faits de fibres continues unidirectionnelles ou sous forme de tissus, mélangées à une autre résine thermodurcissable estérique compatible.

Dans une variante, un des constituants 19, 21 est en thermoplastique et issu de moulage par injection d'un thermoplastique mélangé à des fibres coupées, comprenant un lé de renfort local fait de fibres continues unidirectionnelles ou sous forme de tissus, mélangées à une matière plastique chimiquement compatible avec le thermoplastique intégré au constituant. Cette intégration peut résulter d'un apport du lé après moulage, par une technique de fixation telle que la soudure thermoplastique, bien connue de l'homme du métier et qui ne sera pas détaillée ici.

Sur la figure 4, on a représenté une aile 35 qui est un panneau de carrosserie qui recouvre le passage de roue 15 et tout le montant arrière du véhicule. Cette aile 35 est collée aux constituants 19, 21. Plus précisément, comme on le voit sur la figure 2, l'aile 35 est collée, vers l'avant dans le sens de roulement du véhicule, au constituant interne 19 par des rebords avant 37 de collage de peau de ce dernier et, vers l'arrière, au constituant externe 21 par des rebords arrière 39 de collage de peau de ce dernier. L'aile 35 contribue à compléter le corps creux 33 et donc à augmenter la rigidité de l'ensemble de constituants 19, 21, mais elle n'est pas indispensable au respect du cahier des charges de rigidité de la structure 1 du véhicule, du fait que l'invention permet déjà de refermer la section formée par le constituant interne 19 et le constituant externe 21 pour former le corps creux 33.

On voit sur la figure 1 que la pièce de structure 1 forme un anneau arrière apte à recevoir un hayon 55 (figure 6). Cet anneau arrière porte un siège de joint d'étanchéité pour un joint de hayon (non représenté) et ce siège est formé par le constituant externe 21 s'étendant sur toute la hauteur de l'anneau.

Sur la figure 5 et sa section VI-VI représentée en figure 6, on voit la partie supérieure du pilier droit 9. Le constituant interne 19 est recouvert par le constituant externe 21 sur toute la hauteur du pilier 7, 9, y compris l'angle supérieur de l'anneau 41, où l'on constate que le constituant externe 21 est courbe pour se raccorder avec la traverse supérieure 11. Une portion terminale 47 de la traverse supérieure 11 recouvre le constituant externe 21 ainsi que le constituant interne 19. La traverse supérieure 11 constitue un troisième constituant qui se superpose aux deux autres constituants 19, 21, de sorte que ces trois constituants forment entre eux deux corps creux 49, qui ont une paroi mitoyenne en commun formée par le constituant externe 21. Les trois constituants que sont le constituant interne 19, le constituant externe 21 et la traverse supérieure 11, sont reliés continument par des segments de solidarisation continus. La paroi externe des deux corps creux 49 est faite de la superposition du constituant externe 21 et de la portion terminale 47 de la traverse supérieure 11. Comme on le voit sur la section de la figure 6, cette superposition est localement directe - c'est-à-dire que la distance est nulle entre la traverse supérieure 11 et le constituant externe 21 - en un emplacement sensiblement horizontal de l'anneau qui reçoit une platine 51 renforçant la fixation d'une charnière 53 du hayon 55, dont des vis 57 prennent en sandwich la traverse supérieure 11 et le constituant externe 21.

Sur la figure 6, on a aussi représenté la peau 59 du hayon et la peau 61 du toit du véhicule, qui viennent à affleurement dans la position fermée du hayon 55, qui est celle de la figure 5.

L'invention n'est pas limitée aux modes de réalisation décrits.

### Références utilisées dans les dessins

| **Référence** | | **Objet désigné** |
|---|---|---|
| 1 | ... | Structure |
| 3 | ... | Côté gauche |
| 5 | ... | Côté droit |
| 7 | ... | Pilier gauche |
| 9 | ... | Pilier droit |
| 11 | ... | Traverse supérieure |
| 13 | ... | L'arrière du toit |
| 15 | ... | Passage de roue |
| 17 | ... | Custode |
| 19 | ... | Constituant interne |
| 21 | ... | Constituant externe |
| 23 | ... | Rebords plats tournés vers l'extérieur |
| 25 | ... | Arête intérieure |
| 27 | ... | Arête extérieure |
| 29 | ... | Rebords plats tournés vers l'intérieur |
| 31 | ... | Arêtes longitudinales |
| 33 | ... | Corps creux |
| 35 | ... | Aile |
| 37 | ... | Rebords avant de collage de peau |
| 39 | ... | Rebords arrière de collage de peau |
| 41 | ... | Angle supérieur de l'anneau |
| 47 | ... | Portion terminale de la traverse supérieure |
| 49 | ... | Deux corps creux |
| 51 | ... | Platine |
| 53 | | Charnière |
| 55 | ... | Hayon |
| 57 | ... | Vis |
| 59 | ... | Peau du hayon |
| 61 | ... | Peau du toit |

## Revendications

1. Pièce de structure (1) arrière d'un véhicule automobile, comprenant au moins un pilier (7, 9) latéral arrière constitué par un ensemble de constituants (19, 21) assemblés les uns aux autres, dans laquelle les constituants (19, 21) sont majoritairement réalisés en matière plastique et certains au moins des constituants (19, 21) sont solidarisés les uns aux autres le long de segments de solidarisation continus, **caractérisée en ce que** les segments de solidarisation continus présentent chacun une longueur minimale de 10 cm et laissent entre eux des discontinuités d'au maximum 10 mm et **en ce que** toutes les paires de surfaces en vis-à-vis appartenant aux constituants (19, 21) qui sont non solidarisées entre elles sont distantes, deux à deux dans une paire, d'au moins 7 mm..

2. Pièce de structure (1) selon la revendication 1, dans laquelle les segments de solidarisation continus sont des cordons de collage.

3. Pièce de structure (1) selon la revendication 2, dans laquelle les cordons de collage ont une largeur comprise entre 8 mm et 25 mm, de préférence entre 10 et 20 mm.

4. Pièce de structure (1) selon la revendication 1, dans laquelle les segments de solidarisation continus sont des lignes de soudure thermoplastique.

5. Pièce de structure (1) selon l'une quelconque des revendications précédentes, dans laquelle l'un au moins des constituants (19, 21) comprend un insert métallique.

6. Pièce de structure (1) selon l'une quelconque des revendications précédentes, comprenant deux piliers (7, 9) latéraux arrières réunis par une traverse supérieure (11).

7. Pièce de structure (1) selon la revendication 6, dans laquelle les deux piliers (7, 9) latéraux arrières sont réunis par un plancher.

8. Pièce de structure (1) selon l'une quelconque des revendications précédentes, dans laquelle l'un des trois constituants (19, 21) est solidarisé à un panneau de carrosserie (35) le long de segments de solidarisation continus.

## Patentansprüche

1. Hinteres Strukturteil (1) eines Kraftfahrzeugs, das mindestens eine hintere seitliche Säule (7, 9) aufweist, die aus einem Satz zusammengesetzter Bauteile (19, 21) besteht, wobei die Bauteile (19, 21) zum größten Teil aus Kunststoff bestehen und mindestens einige der Bauteile (19, 21) entlang durchgehender Verbindungssegmente miteinander verbunden sind, **dadurch gekennzeichnet, dass** die durchgehenden Verbindungssegmente jeweils eine Mindestlänge von 10 cm aufweisen und zwischen sich Lücken von höchstens 10 mm belassen und dass alle Paare gegenüberliegender Flächen der nicht miteinander verbundenen Bauteile (19, 21) paarweise mindestens 7 mm voneinander entfernt sind.

2. Strukturteil (1) nach Anspruch 1, bei dem die durchgehenden Verbindungssegmente Klebeschnüre sind.

3. Strukturteil (1) nach Anspruch 2, bei dem die Klebeschnüre eine Breite zwischen 8 mm und 25 mm, vorzugsweise zwischen 10 und 20 mm, haben.

4. Strukturteil (1) nach Anspruch 1, wobei die durchgehenden Verbindungssegmente thermoplastische Schweißlinien sind.

5. Strukturteil (1) nach einem der vorhergehenden Ansprüche, bei dem mindestens einer der Bauteile (19, 21) einen Metalleinsatz aufweist.

6. Strukturteil (1) gemäß einem der vorhergehenden Ansprüche, bestehend aus zwei hinteren seitlichen Säulen (7, 9), die durch einen oberen Querträger (11) verbunden sind.

7. Strukturteil (1) nach Anspruch 6, in dem die beiden hinteren seitlichen Säulen (7, 9) durch einen Boden verbunden sind.

8. Strukturbauteil (1) nach einem der vorhergehenden Ansprüche, bei dem eines der drei Bauteile (11, 19, 21) entlang durchgehender Verbindungssegmente mit einer Karosserieplatte (35) verbunden ist.

## Claims

1. Rear structural part (1) of a motor vehicle, comprising at least one rear lateral pillar (7, 9) consisting of a set of interconnected components (19, 21), the components (19, 21) being made predominantly of plastics material and at least some of the components (19, 21) being secured to one another along continuous securing segments, **characterized in that** the continuous securing segments each have a minimum length of 10 cm and leave interruptions of at most 10 mm between them, and **in that** all the pairs of facing surfaces belonging to the components (19, 21) that are not secured to one another are remote from one another, two by two in a pair, by at least 7 mm.

2. Structural part (1) according to claim 1, wherein the continuous securing segments are adhesive beads.

3. Structural part (1) according to claim 2, wherein the adhesive beads have a width of between 8 mm and 25 mm, preferably between 10 and 20 mm.

4. Structural part (1) according to claim 1, wherein the continuous securing segments are thermoplastic weld lines.

5. Structural part (1) according to any of the preceding claims, wherein at least one of the components (19, 21) comprises a metal insert.

6. Structural part (1) according to any of the preceding claims, comprising two rear lateral pillars (7, 9) joined by an upper cross-member (11).

7. Structural part (1) according to claim 6, wherein the two rear lateral pillars (7, 9) are joined by a floor.

8. Structural part (1) according to any of the preceding claims, wherein one of the three components (11, 19, 21) is secured to a body panel (35) along continuous securing segments.
